(19) Europäisches Patentamt
European Patent Office
Office européen des brevets

(11) **EP 1 990 612 B1**

(12) # EUROPÄISCHE PATENTSCHRIFT

(45) Veröffentlichungstag und Bekanntmachung des Hinweises auf die Patenterteilung:
**17.03.2010 Patentblatt 2010/11**

(51) Int Cl.:
***G01F 1/684*** *(2006.01)* ***G01N 27/07*** *(2006.01)*
***G01P 5/00*** *(2006.01)* ***G01P 5/10*** *(2006.01)*
***G01P 5/12*** *(2006.01)*

(21) Anmeldenummer: **08007482.6**

(22) Anmeldetag: **17.04.2008**

(54) **Anordnung zur zweidimensionalen Messung des Geschwindigkeitsfeldes in Strömungen**

Device for two-dimensional measuring of the velocity field in flows

Agencement de mesure bidimensionnelle de la plage de vitesse dans des écoulements

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **27.04.2007 DE 102007019927**

(43) Veröffentlichungstag der Anmeldung:
**12.11.2008 Patentblatt 2008/46**

(73) Patentinhaber: **Forschungszentrum Dresden - Rossendorf e.V.**
**01328 Dresden (DE)**

(72) Erfinder: **Hampel, Uwe**
**01324 Dresden (DE)**

(56) Entgegenhaltungen:
**EP-A- 0 717 270** **EP-A- 1 387 150**
**US-A1- 2006 090 573**

- **H-M PRASSER A BÖTTGER ET AL: "A new electrode-mesh tomograph for gas-liquid flows" FLOW MEASUREMENT AND INSTRUMENTATION, BUTTERWORTH-HEINEMANN, OXFORD, GB, Bd. 9, 1. Januar 1998 (1998-01-01), Seiten 111-119, XP002389213 ISSN: 0955-5986**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 990 612 B1

## Beschreibung

Die Erfindung betrifft eine Anordnung zur zweidimensionalen Messung des Geschwindigkeitsfeldes in Strömungen. Die Anordnung ermöglicht Messungen in freien Strömungsquerschnitten sowie auf Oberflächen von Festkörpern. Anwendungsgebiete sind die Untersuchung von Gas- und Flüssigkeitsströmungen.

Zur Messung von Geschwindigkeitsfeldern in Strömungen existieren eine Reihe von allgemein bekannten Messverfahren. Zu diesen zählen Laser-Doppler-Messverfahren (LDA, PDPA), Ultraschall-Doppler-Messverfahren, Particle Imaging Velocimetry (PIV), videometrische Partikel Tracking Verfahren (VPT), Computer Aided Radioactive Particle Tracking (CARPT), Positron-Emission-Particle-Tracking (PEPT), sowie multiple Anordnungen lokaler Geschwindigkeitssonden, bestehend zum Beispiel aus Hitzedrahtanemometer-Sonden, Hitzefilmanemometer-Sonden oder optischen Sonden. Jedes dieser Verfahren hat bestimmte Vor- und Nachteile, die den Bereich möglicher Anwendungen festlegen. Optische Messverfahren, wie LDA, PDPA, PIV und VPT erfordern einen optischen Zugang zur Strömung sowie optisch klare Fluide, die mit einer ausreichenden Anzahl kleiner auftriebsneutraler Tracerpartikel beladen sein müssen. Ultraschall-Doppler-Messverfahren benötigen eine gewisse Messstrecke zur Bestimmung der Dopplerverschiebung. Daher ist es schwierig, mit US-Doppler-Messung Geschwindigkeitsfelder zu ermitteln. Weiterhin sind Ultraschallsensoren nicht für höhere Betriebstemperaturen geeignet, womit eine Anwendung in heißen Strömungen kaum möglich ist. Radioaktive Messverfahren (CARPT, PEPT) erfordern den Umgang mit offenen radiaktiven Quellen und sind daher aufgrund der damit verbundenen Strahlenschutzmaßnahmen aufwändig und nicht überall einsetzbar. In jüngster Zeit erfahren Anordnungen mit multiplen Sonden auf Basis traditioneller Strömungsgeschwindigkeitssensoren mit dem Aufkommen neuer Mikrofertigungstechnologien (MEMS) verstärktes Interesse. Hitzedraht- und Hitzefilmanemometer-Sensoren lassen sich sehr robust aufbauen und sind damit für den Einsatz in extremen Umgebungen (zum Beispiel heiße Gasströmungen. Hochdruckanwendungen, chemisch aggressive Stoffe) geeignet. EP 1 387 150 A2 beschreibt eine Anordnung zur zweidimensionalen Strömungsmessung, bei der die Anordnung aus einer Vielzahl von Heizelementen im Strömungsquerschnitt und einer Messelektronik besteht. DE 196 49 011 C2 und US 2006/0090573 A1 beschreiben Gitter von drahtförmigen elektrischen Leitern innerhalb eines Sensorrahmens. Nachteilig an den bekannten Anordnungen zur Erfassung von Geschwindigkeitsverteilungen mit Hitzedraht- oder Hitzefilmanemometer-Sensoren ist der für den gleichzeitigen Betrieb derartiger Sensoren an verschiedenen Messorten erforderliche Verdrahtungsaufwand.

Aufgabe der vorliegenden Erfindung ist es, eine Anordnung zur Messung der Geschwindigkeitsverteilung in einem Messquerschnitt anzugeben, mit der vor allem Flüssigkeits- oder Gasströmungen untersucht werden können und die über ein möglichst effizientes elektronisches Anregungs- und Messschema verfügt.

Die Aufgabe wird durch die Merkmale des Anspruchs 1 gelöst. Ausgestaltungen der Erfindung sind in den abhängigen Ansprüchen ausgeführt.

Die Erfindung wird nachfolgend anhand eines Ausführungsbeispiels näher erläutert.

In den zugehörigen Zeichnungen zeigen:

Figur 1 das Prinzip der Anordnung in der Draufsicht,
Figur 2 den Schnitt A-A nach Figur 1, ergänzt um ein Verbindungsdetail und
Figur 3 das Prinzip der Anordnung in der Draufsicht mit alternativer elektronischer Beschaltung.

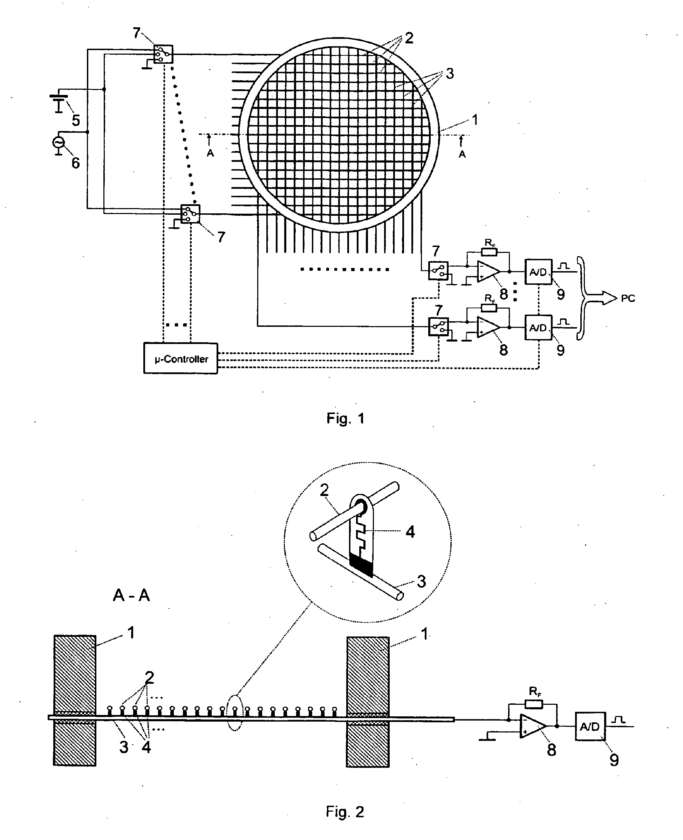

Die Anordnung besteht aus einem Gitter von draht- oder stabförmigen elektrischen Leitern, die in einem Sensorrahmen (1) gegeneinander und gegen das Erdpotenzial isoliert befestigt und in mindestens zwei in geringem axialen Abstand zueinander liegenden Ebenen angeordnet sind, sowie einer zugeordneten Messelektronik. Auf Grund ihrer elektrischen Funktion werden die elektrischen Leiter der einen Gitterebene im Folgenden als Anregungselektroden (2) bezeichnet, die elektrischen Leiter der zweiten Gitterebene als Empfängerelektroden (3). Die Anregungselektroden (2) und Empfängerelektroden (3) laufen jeweils innerhalb einer Ebene in einem geringen. Abstand parallel zueinander. In der Draufsicht bilden die 2 x N Leiter der beiden Gitterebenen ein Gitter mit N x N Kreuzungspunkten, wobei die Anregungs- (2) und die Empfängerelektroden (3) unter einem Winkel größer 0° gegeneinander orientiert sind. In den Kreuzungspunkten des Leitergitters sind die jeweiligen Elektrodenpaare durch einen temperaturabhängigen elektrischen Widerstand, das Hitzeelement (4), dargestellt in Figur 2, verbunden. Das Hitzeelement (4) sollte neben seinen thermoelektrischen Eigenschaften einer möglichst steilen Temperaturabhängigkeit und eines Widerstandswertes im Bereich einiger Ohm über eine Form verfügen, die die zu untersuchende Strömung möglichst wenig beeinflusst. Vorteilhaft ist ein dünner zylindrischer Körper eines Leitermaterials wie Platin, Titan, Wolfram oder Legierungen, der in den Gitterkreuzungspunkten elektrisch mit den Anregungselektroden (2) und Empfängerelektroden (3) verbunden ist, oder ein elektrisch nicht leitfähiger Festkörper, zum Beispiel ein Keramiksubstrat, auf dem ein Widerstandselement in Dünn- oder Dickschichttechnik aufgebracht ist, welches dann wieder über entsprechende elektrische Kontakte mit den Anregungselektroden (2) und Empfängerelektroden (3) verbunden ist.

Das Prinzip der Hitzeelementanemometrie erfordert es, das Hitzeelement (4) mittels eines elektrischen Stroms zu erwärmen und die konvektive Kühlung des Elements durch das Umgebungsmedium durch Messung des ohmschen Widerstandes des Hitzeelementes (4) zu bestimmen. Dies ist für die Erfindung auf verschiedenen Wegen möglich. Mögliche Schaltungsvarianten dazu sind schematisch in den Figuren 1 bis 3 dargestellt.

Bei der in Figur 1 dargestellten Schaltungsvariante werden mittels der dreipoligen Analogschalter (7), die von einem Mikrocontroller gesteuert werden, nach einem definierten Messschema jeweils kurzzeitig Spannungen an den Hitzeelementen (4) angelegt. Nach dem Messschema werden dabei zunächst jeweils N-1 der N Anregungselektroden (2) auf Massepotential gelegt, wobei die Empfängerelektroden (3) mittels der den Empfängerelektroden (3) nachgeschalteten Analogschalter (7) alle mit Massepotential verbunden werden. Die verbleibende Anregungselektrode, fortan als aktive Anregungselektrode bezeichnet, wird kurzzeitig mit der Spannung der Heizspannungsquelle (5) beaufschlagt, wodurch ein Heizstrom durch die mit der aktiven Anregungselektrode (2) verbundenen Hitzeelemente (4) fließt. Die Hitzeelemente (4) werden dadurch erwärmt. Nach einer vorgegebenen Zeitspanne wird mittels Umschaltens des der aktiven Anregungselektrode vorgeschalteten Analogschalters (7) die Messspannung der Messspannungsquelle (6) an die aktiven Anregungselektroden (2) angelegt. Gleichzeitig werden die den Empfängerelektroden (3) nachgeschalteten analogschalter (7) so geschaltet, dass die Empfängerelektroden (3) direkt mit den Eingängen der Strom-Spannungs-Wandler (8) verbunden sind. Der durch ein mit der aktiven Anregungselektrode verbundenes Hitzeelement (4) zum Strom-Spannungs-Wandler (8) fließende Gleich- oder Wechselstrom wird dann am Strom-Spannungs-Wandler (8) in ein Spannungssignal gewandelt und durch die nachgeschalteten Analog-Digital-Wandler (9) in ein digitales Signal konvertiert, welches anschließend durch einen Rechner weiterverarbeitet werden kann. Auf Grund des virtuellen inneren Kurzschlusses des Strom-Spannungs-Wandlers (8) spielen die parallelen Impedanzen der anderen Hitzeelemente (4) keine Rolle. Der ohmsche Widerstand $R_{HE}$ des Hitzelementes (4) bestimmt sich aus dem Quotienten der Anregungsspannung $U_A$ und des fließenden Stromes durch den Empfängerdraht. Mit der gemessenen Ausgangsspannung am Strom-Spannungs-Wandler (8) $U_T$ ergibt sich der ohmsche Widerstand $R_{HE}$ des Hitzelementes (4) zu

$$R_{HE} = \frac{U_A}{I_E} = R_F \frac{U_A}{U_T},$$

wobei $R_F$ den Rückkopptungswiderstand am Strom-Spannungs-Wandler bezeichnet. Der ohmsche Widerstand des Hitzelementes (4) $R_{HE}$ steht in bekannter Beziehung zur Temperatur $T_{HE}$ des Hitzelementes (4). Diese wiederum ist eine Funktion verschiedener Stoffparameter des Hitzeelementes (4) und des Umgebungsmediums (Wärmeleitfähigkeit, Wärmekapazität, Wärmeübergangswiderstand) sowie der Strömungsgeschwindigkeit am Hitzeelement (4). Da der letztere Zusammenhang im Allgemeinen komplex und nichtlinear ist, muss der Sensor entsprechend kalibriert werden, um vom temperaturabhängigen Widerstand $R_{HE}$ auf die Strömungsgeschwindigkeit zurück zu rechnen.

Ein besonderer Vorteil der Anordnung besteht darin, dass durch die Trennung von Heizspannungsquelle (5) und Messspannungsquelle (6) sowie das Abschalten der Strom-Spannungs-Wandler (8) während der Heizperiode eine deutlich höhere Heizleistung aufgebracht werden kann, ohne dass der Rückkoppelwiderstand $R_F$ des Strom-Spannungs-Wandlers (8) den Stromfluss durch das Hitzeelement (4) begrenzt.

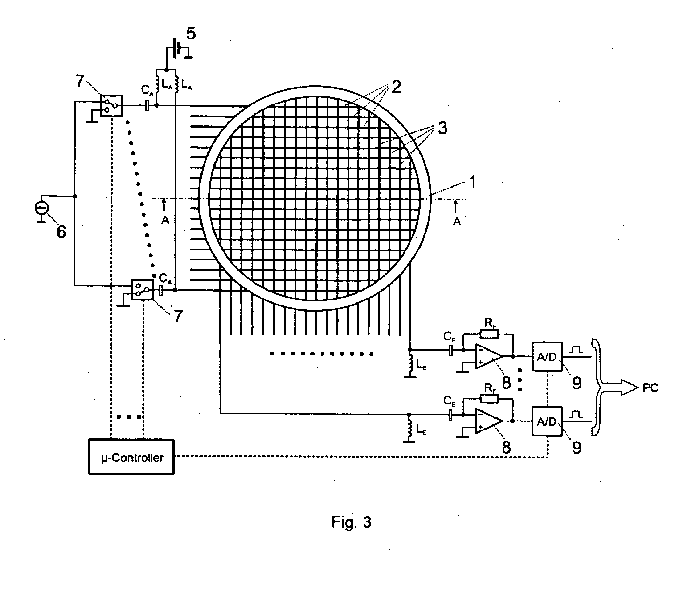

Figur 3 zeigt eine Schaltungsvariante bei der, anders als in Figur 1, die Hitzeelemente (4) mit einem kontinuierlichen Heizstrom betrieben werden. Der Heizstrom wird als Gleichstrom bzw. niederfrequenter Wechselstrom durch die Heizspannungsquelle (5) erzeugt und durchfließt die Induktivitäten $L_A$ der Anregungsseite und $L_E$ der Empfängerseite. Die Messung des ohmschen Widerstandes der Hitzeelemente (4) erfolgt parallel durch Anlegen einer hochfrequenten Wechselspannung der separaten Messspannungsquelle (6) an jeweils eine Anregungselektrode (2) über den Koppelkondensator $C_A$ und Messung des Wechselstromes durch jeweils ein Hitzeelement (4) und einen der Koppelkondensatoren $C_E$ mittels Strom-Spannungs-Wandler (8).

Bei den vorgeschlagenen Anordnungen ist zu berücksichtigen, ob durch das Untersuchungsmedium ein Stromfluss zwischen den Anregungselektroden (2) und Empfängerelektroden (3) außerhalb des Hitzeelements (4) möglich ist. Dies kann etwa bei Kontakt des Sensorgitters mit leitfähigen Fluiden oder metallischen Oberflächen der Fall sein. In einem solchen Fall müssen alle leitfähigen Oberflächen des Sensors mit einer elektrisch isolierenden Schutzschicht überzogen werden.

## Patentansprüche

1. Anordnung zur zweidimensionalen Messung des Geschwindigkeitsfeldes in Strömungen, bestehend aus

- einer Vielzahl von Hitzeelementen (4), die im Querschnitt einer Strömung entsprechend der Messanforderung verteilt sind und
- einer zugeordneten Messelektronik, bestehend aus einer Heizspannungsquelle (5), zum Erzeugen des Heizstromes durch das Hitzeelement, Strom- Spannungs-Wandlern (8) und Analog-Digital-Wandlern (9),

**dadurch gekennzeichnet, dass**

- ein Gitter von draht- oder stabförmigen elektrischen Leitern, die innerhalb eines Sensorrahmens (1) elektrisch gegeneinander und gegen das Erdpotenzial isoliert in zwei koplanaren Ebenen im Abstand von wenigen Millimetern aufgespannt sind, wobei die elektrischen Leiter der einen Ebene als Anregungselektroden (2) dienen und parallel zueinander orientiert sind, die elektrischen Leiter der anderen Ebene als Empfängerelektroden (3) dienen und ebenfalls parallel zueinander orientiert sind, sowie die Anregungselektroden (2) in einem Winkel größer 0° zu den Empfängerelektroden (3) orientiert sind und somit in der Draufsicht ein Gitter von Kreuzungspunkten bilden,
- die Anregungselektroden (2) und die Empfängerelektroden (3) in jedem Kreuzungspunkt des Gitters durch einen Festkörper mit temperaturabhängem ohmschen Widerstand, dem Hitzeelement (4), elektrisch miteinander verbunden sind,
- die zugeordnete Messelektronik, zusätzlich zu der den Anregungselektroden (2) vorgeschalteten Heizspannungsquelle (5), über eine den Anregungselektroden (2) vorgeschaltete Messspannungsquelle (6) verfügt,
- jede Anregungselektrode (2) mit einem dreipoligen Analogschalter (7) verbunden ist, der die Anregungselektrode wahlweise mit der Heizspannungsquelle (5), der Messspannungsquelle (6) oder Massepotenzial verbindet,
- jede Empfängerelektrode (3) mit einem Analogschalter (7) verbunden ist, der die Empfängerelektrode (3) wahlweise mit einem festen Bezugspotenzial (zum Beispiel Masse-Potenzial) oder einem Strom-Spannungs-Wandler (8) verbindet,
- die Strom-Spannungs-Wandler (8) mit jeweils einem Analog-Digital-Wandler (9) verbunden sind,
- die Analog-Digital-Wandler (9) über eine I/O-Schnittstelle mit einem Mess-PC zur Datenerfassung und —verarbeitung verbunden sind.

2. Anordnung nach Anspruch 1, **dadurch gekennzeichnet, dass** jede Anregungselektrode (2) über eine Induktivität $L_A$ mit der Heizspannungsquelle (5) verbunden ist, sowie jede Empfängerelektrode (3) über eine Induktivität $L_E$ mit einem gegebenen Potenzial (zum Beispiel Masse-Potenzial) verbunden ist, so dass durch die Induktivitäten $L_A$ und $L_E$ sowie das Hitzeelement (4) ein kontinuierlicher Heizstrom fließt, und jede Anregungselektrode (2) über einen Koppelkondensator $C_A$ mit einer schaltbaren Messspannungsquelle (6) verbunden ist und die Empfängerelektroden (3) zur Messung des ohmschen Widerstandes des Heizelements (4) über Koppelkondensatoren $C_E$ mit den Strom-Spannungs-Wandlern (8) verbunden sind.

3. Anordnung nach Anspruch 1, **dadurch gekennzeichnet, dass** alle elektrisch leitfähigen Oberflächen des Gitters mittels einer elektrisch isolierenden Schutzschicht vom Umgebungsmedium isoliert sind.

## Claims

1. Arrangement for two-dimensional measurement of the velocity field in flows, comprising

- a multiplicity of heating elements (4) which are distributed in accordance with the measurement requirement in the cross section of a flow, and
- associated measurement electronics, comprising a heating voltage source (5) for producing the heating current by means of the heating element, current/voltage converters (8) and analogue/digital converters (9),

**characterized in that**

- a grid of electrical conductors, which are in the form of wires or rods, are electrically insulated from one another and from the earth potential within a sensor frame (1) and are stretched on two coplanar planes with the distance of a few millimetres between them, wherein the electrical conductors on one level are used as excitation electrodes (2) and are oriented parallel to one another, the electrical conductors on the other level are used as receiver electrodes (3) and are likewise oriented parallel to one another, and the excitation electrodes (2) are oriented at an angle of more than 0° with respect to the receiver electrodes (3) and thus from a grid of crossing points in a plan view,
- the excitation electrodes (2) and the receiver electrodes (3) are electrically connected to one another at each crossing point in the grid by a solid body with a temperature-dependent electrical resistance, the heating element (4),
- the associated measurement electronics, in addition to the heating voltage source (5) upstream of the excitation electrodes (2), has a measurement voltage source (6) upstream of the excitation electrodes (2),
- each excitation electrode (2) is connected to a three-pole analogue switch (7) which selectively connects the excitation electrode to the heating voltage source (5), to the measurement voltage source (6) or to earth potential,
- each receiver electrode (3) is connected to an analogue switch (7) which selectively connects the receiver electrode (3) to a fixed reference potential (for example earth potential) or to a current/voltage converter (8),

- the current/voltage converters (8) are each connected to one analogue/digital converter (9),
- the analogue/digital converters (9) are connected via an I/O interface to a measurement PC for data acquisition and processing.

2. Arrangement according to Claim 1, **characterized in that** each excitation electrode (2) is connected via an inductance LA to the heating voltage source (5), and each receiver electrode (3) is connected via an inductance LE to a given potential (for example earth potential), such that a continuous heating current flows through the inductances LA and LE, and each excitation electrode (2) is connected via a coupling capacitor CA to a switchable measurement voltage source (6), and the receiver electrodes (3) are connected via coupling capacitors CE to the current/voltage converters (8) in order to measure the electrical resistance of the heating element (4).

3. Arrangement according to Claim 1, **characterized in that** all the electrically conductive surfaces of the grid are insulated from the surrounding medium by means of an electrically insulating protective layer.

**Revendications**

1. Système de mesure bidimensionnelle d'un champ de vitesses d'écoulements, constitué de :

- plusieurs éléments chauffants (4) répartis en accord avec la tâche de mesure dans la section transversale d'un écoulement et
- d'une électronique de mesure qui leur est associée et qui est constituée d'une source (5) de tension de chauffage qui délivre un courant de chauffage dans l'élément chauffant, de convertisseurs courant-tension (8) et de convertisseurs analogiques-numériques (9),

**caractérisé en ce que**

- une grille de conducteurs électriques en forme de fils ou de barreaux isolés les uns par rapport aux autres et vis-à-vis du potentiel de terre sont placés à l'intérieur d'un encadrement (1) du détecteur à intervalles de quelques millimètres dans deux plans coplanaires, les conducteurs électriques d'un des plans servant d'électrodes d'excitation (2) et étant orientés parallèlement les uns aux autres, les conducteurs électriques de l'autre plan servant d'électrodes de réception (3) et étant également orientés parallèlement les uns aux autres, les électrodes d'excitation (2) étant orientées par rapport aux électrodes de réception (3) sous un angle supérieur à 0° et formant ainsi dans une vue en plan une grille de points de croisement,
- **en ce que** les électrodes d'excitation (2) et les électrodes de réception (3) sont reliées électriquement les unes aux autres en chaque point de croisement de la grille par un corps solide dont la résistance ohmique dépend de la température et sont reliées à l'élément chauffant (4),
- **en ce qu'**outre la source (5) de tension de chauffage raccordée en amont des électrodes d'excitation (2), l'électronique de mesure associée dispose d'une source (6) de tension de mesure branchée en amont des électrodes d'excitation (2),
- **en ce que** chaque électrode d'excitation (2) est reliée à un commutateur analogique tripolaire (7) qui relie sélectivement l'électrode d'excitation à la source (5) de tension de chauffage, à la source (6) de tension de mesure ou au potentiel de masse,
- **en ce que** chaque électrode de réception (3) est reliée à un commutateur analogique (7) qui relie sélectivement l'électrode de réception (3) à un potentiel de référence fixe (par exemple le potentiel de masse) ou à un convertisseur courant-tension (8),
- **en ce que** les convertisseurs courant-tension (8) sont reliés chacun à un convertisseur analogique-numérique (9) respectif et
- **en ce que** les convertisseurs analogiques-numériques (9) sont reliés par une interface d'entrée-sortie à un PC de mesure qui enregistre et traite les données.

2. Système selon la revendication 1, **caractérisé en ce que** chaque électrode d'excitation (2) est reliée à la source (5) de tension de chauffage par une inductance LA, **en ce que** chaque électrode de réception (3) est reliée par une inductance LE à un potentiel donné (par exemple le potentiel de masse), de sorte qu'un courant continu de chauffage s'écoule à travers les inductances LA et LE ainsi qu'à travers l'élément chauffant (4), **en ce que** chaque électrode d'excitation (2) est reliée par un condensateur de couplage CA à une source (6) commutable de tension de mesure et **en ce que** les électrodes de réception (3) sont reliées par des condensateurs de couplage CE aux convertisseurs courant-tension (8) pour mesurer la résistance ohmique de l'élément chauffant (4).

3. Système selon la revendication 1, **caractérisé en ce que** toutes les surfaces électriquement conductrices de la grille sont isolées du fluide environnant par une couche de protection électriquement isolante.

7
2
3
5
1
6
A
A
7
7
R_F
A/D
8
9
PC
7
R_F
A/D
8
9
μ-Controller

Fig. 1

2
4
3
A - A
1
1
2
R_F
A/D
3
4
8
9

Fig. 2

5
7
$C_A$
$L_A$
$L_A$
2
3
1
6
A
A
7
$C_A$
$R_F$
$C_E$
$L_E$
8
A/D
9
PC
$R_F$
$C_E$
$L_E$
8
A/D
9
μ-Controller

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1387150 A2
- DE 19649011 C2
- US 20060090573 A1